# FASCICULE DE BREVET EUROPEEN

(11) **EP 0 437 400 B1**
(45) Date de publication et mention de la délivrance du brevet: **29.06.1994**
(21) Numéro de dépôt: 91400040.1
(22) Date de dépôt: 10.01.1991
(51) Int. Cl.: G06F 1/24

(54) **Procédé et dispositif pour associer à la réception d'impulsions de réinitialisation par un microprocesseur l'accès à des sous-programmes différents**
Verfahren und Einrichtung zum Verknüpfen von Reinitialisierungsimpulsen für einen Mikroprozessor mit Zugriff zu verschiedenen Unterprogrammen
Method and device for associating the reception of restarting pulses for a microprocessor, to the access to different subprograms

(30) Priorité: 12.01.1990 FR 9000344
(43) Date de publication de la demande: 17.07.1991
(73) Titulaire: VALEO SECURITE HABITACLE, 78290 Croissy-Sur-Seine (FR)
(72) Inventeur: Chelard, Gilles, F-78440 Issou (FR); Sague, Alain, F-92500 Rueil-Malmaison (FR)
(74) Mandataire: Martin, Jean-Jacques

(56) Documents cités:
- EP-A- 0 009 862
- WO-A-89/09957
- DE-A- 3 248 680
- FR-A- 2 638 867

## Description

La présente invention a trait d'une façon générale au domaine des systèmes à microprocesseur, et concerne plus particulièrement un procédé et un dispositif pour associer à la réception d'impulsions de réinitialisation par un microprocesseur l'accès à des sous-programmes différents selon l'origine de l'impulsion.

Dans le domaine de l'automobile notamment, les constructeurs exigent de façon classique que des systèmes électroniques équipés de microprocesseurs présentent une consommation en courant qui soit la plus faible possible. C'est pourquoi, typiquement, un tel microprocesseur est laissé en sommeil tant qu'aucune opération ne lui est demandée. Sa consommation est alors extrêmement modérée (de l'ordre de 10 microampères).

En outre, un tel microprocesseur est maintenant couramment utilisé pour remplir plusieurs fonctions, par appel de sous-programmes déterminés contenus dans sa mémoire morte.

Pour réveiller le microprocesseur lorsqu'un sous-programme donné doit être effectué, on applique une impulsion soit sur sa borne d'entrée de réinitialisation RESET, soit sur sa borne d'entrée d'interruption INT. Dans la majorité des cas, ce sont en effet les deux seules bornes pouvant être sollicitées pour agir sur le fonctionnement du microprocesseur depuis l'extérieur.

Par ailleurs, de façon tout à fait classique, on applique une impulsion RESET au microprocesseur à chaque fois que le système est remis sous tension.

Ainsi, en théorie, seule la borne INT est disponible pour intervenir depuis l'extérieur sur le fonctionnement du microprocesseur.

Et lorsque plusieurs organes du système sont associés au microprocesseur et doivent pouvoir le réveiller, ils partagent donc les accès par les bornes RESET et INT. Mais la difficulté est que le microprocesseur ne peut alors pas faire immédiatement, dès son réveil, la distinction entre plusieurs origines possibles de ce réveil, alors qu'il serait souhaitable d'effectuer sans perte de temps le branchement vers le sous-programme approprié en relation avec l'organe qui a sollicité ce réveil.

WO 89/09957 décrit un tel système comprenant un moyen servant à distinguer entre un premier et un second signal de réinitialisation.

La présente invention vise à pallier ces inconvénients de la technique antérieure et à proposer un procédé qui permette au microprocesseur de distinguer entre une impulsion de réinitialisation liée à la mise sous tension du système et une impulsion de réinitialisation ayant une origine autre, et ce de façon tout à fait simple et économique.

Elle concerne à cet effet un procédé pour associer à la réception par un microprocesseur d'une impulsion de réinitialisation, engendrée par un circuit (110), l'accès à un sous-programme particulier selon que l'impulsion est associée à une mise sous tension d'un système incorporant ledit microprocesseur, à des fins de réveil, ou qu'elle constitue une requête en provenance d'un autre organe du système, caractérisé en ce qu'il comprend les étapes consistant à:
lors de la mise sous tension, faire varier d'un premier état présent à la mise sous tension vers un second état représentant la fin de la mise sous tension une information logique accessible par le microprocesseur seulement après un certain intervalle de temps après ladite mise sous tension,
lors de chaque réception d'une impulsion de réinitialisation, effectuer une lecture de ladite information logique avant que ledit intervalle de temps soit écoulé, et,
si l'information logique est dans son premier état, effectuer un branchement vers un sous-programme d'initialisation propre à une mise sous tension, autrement (M=k) effectuer un branchement (40) vers un sous-programme de traitement de ladite requête.

Dans un premier mode de réalisation de l'invention, l'étape consistant à faire varier l'information logique est accomplie par un circuit connecté à une source de tension d'alimentation du microprocesseur et à une borne d'entrée/sortie dudit microprocesseur et agencé pour appliquer à ladite borne un signal qui passe d'un niveau logique bas à un niveau logique haut seulement lorsque ledit intervalle de temps s'est écoulé.

Dans un second mode de réalisation, l'étape consistant à faire varier l'information logique est accomplie par un circuit connecté à une source de tension d'alimentation du microprocesseur et à une borne d'entrée/sortie dudit microprocesseur et agencé pour appliquer à ladite borne un signal qui passe d'un niveau logique haut à un niveau logique bas seulement lorsque ledit intervalle de temps s'est écoulé.

Dans un troisième mode de réalisation, le premier état de l'information logique est donné par le contenu d'un emplacement d'une mémoire vive associée au microprocesseur immédiatement après la mise sous tension, et l'étape consistant à faire varier l'information logique est accomplie en donnant audit emplacement un contenu différent, et représentant le second état, seulement à la fin du déroulement du sous-programme d'initialisation propre à la mise sous tension.

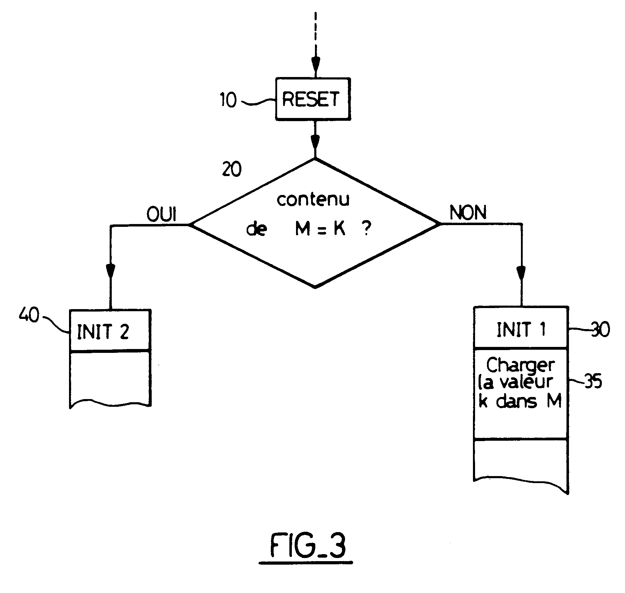

L'invention concerne également un dispositif pour la mise en oeuvre du procédé ci-dessus, caractérisé en ce qu'il comprend un circuit connecté à une source de tension d'alimentation du microprocesseur et à une borne d'entrée/sortie dudit microprocesseur et agencé pour appliquer à ladite borne un signal qui passe d'un niveau logique bas à un niveau logique haut, constituant le second état de l'information logique, seulement lorsque ledit intervalle de temps s'est écoulé, et en ce qu'il comprend un moyen (Fig. 3) pour effectuer, lors de chaque réception (10) d'une impulsion de réinitialisation (t₀, t₃), une lecture (t₁, t₄, 20) de ladite information logique (D1, M) avant que ledit intervalle de temps (δt) soit écoulé, et pour effectuer, si l'information logique (D1, M) est dans son premier état (M≠k), un branchement (30) vers un sous-programme d'initialisation (INIT1) propre à une mise sous tension, autrement (M=k) effectuer un branchement (40) vers un sous-programme (INIT2) de traitement de ladite requête.

De façon préférée, le circuit comprend une résistance montée entre la source de tension d'alimentation du microprocesseur et la borne d'entrée/sortie dudit microprocesseur et un condensateur monté entre ladite borne d'entrée/sortie et la masse.

L'invention concerne enfin un dispositif pour la mise en oeuvre du procédé ci-dessus, caractérisé en ce qu'il comprend un circuit connecté à une source de tension d'alimentation du microprocesseur et à une borne d'entrée/sortie dudit microprocesseur et agencé pour appliquer à ladite borne un signal qui passe d'un niveau logique haut à un niveau logique bas, constituant le second état de l'information logique, seulement lorsque ledit intervalle de temps s'est écoulé, et en ce qu'il comprend un moyen (Fig. 3) pour effectuer, lors de chaque réception (10) d'une impulsion de réinitialisation (t₀, t₃), une lecture (t₁, t₄, 20) de ladite information logique (D1, M) avant que ledit intervalle de temps (δt) soit écoulé, et pour effectuer, si l'information logique (D1, M) est dans son premier état (M≠k), un branchement (30) vers un sous-programme d'initialisation (INIT1) propre à une mise sous tension, autrement (M=k) effectuer un branchement (40) vers un sous-programme (INIT2) de traitement de ladite requête.

Ce circuit comprend de préférence un condensateur monté entre la source de tension d'alimentation du microprocesseur et la borne d'entrée/sortie dudit microprocesseur et une résistance montée entre ladite borne d'entrée/sortie et la masse.

D'autres aspects, buts et avantages de la présente invention apparaîtront mieux à la lecture de la description détaillée suivante de formes de réalisation préférées de celle-ci, donnée à titre d'exemple non limitatif et faite en référence aux dessins annexés, sur lesquels:
la figure 1 est un schéma partiel d'un circuit selon la présente invention pour la mise en oeuvre d'un procédé selon une première forme de réalisation de l'invention,
la figure 2 est un chronogramme illustrant le comportement du circuit de la figure 1, et
la figure 3 est un diagramme logique permettant d'expliquer la mise en oeuvre d'un procédé selon une seconde forme de réalisation de l'invention.

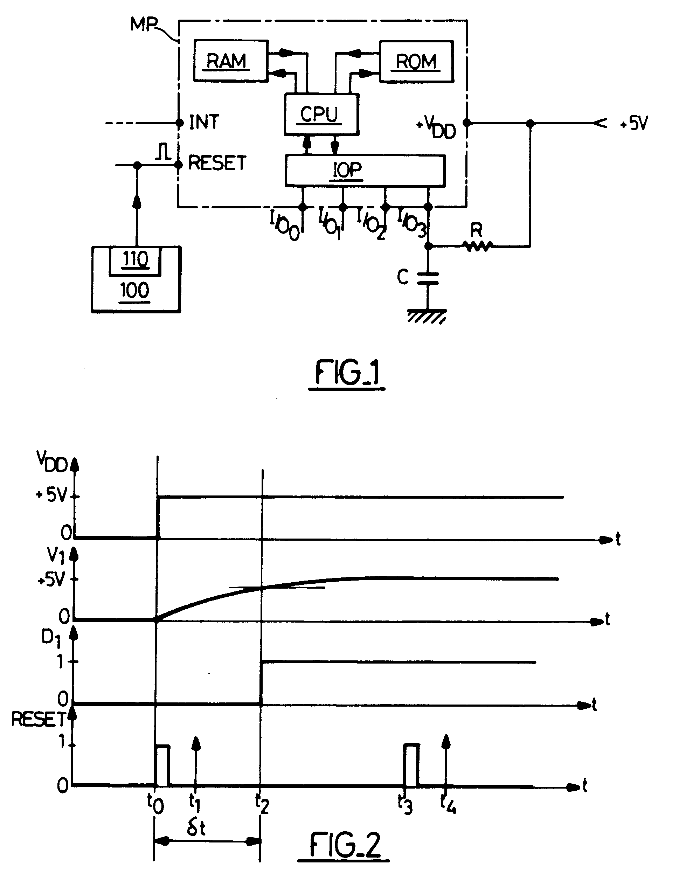

En référence tout d'abord à la figure 1, on a représenté un microprocesseur MP qui comporte classiquement une unité centrale de traitement CPU, une mémoire vive RAM, une mémoire morte ROM contenant des programmes et des ports d'entrée-sortie. Il s'agit par exemple d'un microprocesseur qui incorpore ces divers organes dans un boîtier unique. Pour sa communication avec l'extérieur, le microprocesseur comprend en particulier une entrée de réinitialisation RESET et une entrée d'interruption INT, de façon tout à fait classique.

On trouve également un certain nombre de bornes d'entrées/sorties I/O (ici au nombre de quatre et désignées par I/O₀ à I/O₃ reliées au port d'entrée/sortie IOP incorporé au boîtier.

L'une de ces bornes, en l'espèce la borne I/O₃, est reliée à une première borne d'une résistance R et à une première borne d'un condensateur C. L'autre borne du condensateur est reliée à la masse (Ov), tandis que l'autre borne de la résistance est reliée à la tension d'alimentation V_{DD} (par exemple +5v) du microprocesseur.

Dans le présent exemple, la borne d'entrée RESET est utilisée pour réveiller le microprocesseur d'une part lors de la mise sous tension du système, et d'autre part lors de l'ouverture et de la fermeture des accès du véhicule en utilisant une clé introduite dans la serrure de l'une des portes, afin d'effectuer un branchement vers un sous-programme de validation de l'ordre reçu (distinction entre l'ordre et un signal parasite accidentel) et d'exécution de l'ordre validement reçu. Le dispositif correspondant est schématiquement indiqué en 100 et comprend un circuit 110 propre à engendrer une impulsion de réinitialisation convenant au microprocesseur.

En outre, le microprocesseur MP est programmé de telle sorte qu'à chaque réception d'une impulsion de réinitialisation sur son entrée RESET, il exécute dans un délai très court et avant toute autre opération une lecture de l'information présente sur la borne d'entrée sortie I/O₃, à des fins expliquées plus loin.

Par ailleurs, la borne d'entrée INT reçoit un signal qui provoque le réveil du microprocesseur lorsqu'un signal infrarouge de verrouillage/déverrouillage des accès est reçu au niveau d'un récepteur approprié (non représenté), de manière à appeler de façon classique le sous-programme de vérification par comparaison du code reçu dans le signal infrarouge et d'un code mémorisé dans la mémoire vive ou dans la mémoire morte.

On va maintenant expliquer en référence au chronogramme de la figure 2 le fonctionnement du circuit décrit ci-dessus.

Tout d'abord, lorsqu'à l'instant t0 se produit une mise sous tension du système, la tension V_{DD} passe brusquement de 0 à +5v. Au contraire, la tension V1 sur la borne I/O₃, étant donné la constante de temps du circuit RC appliqué à son entrée, ne croît de 0 à +5V que beaucoup plus lentement, comme illustré.

De la sorte, le signal logique D1 sur cette entrée ne passe du niveau bas "0" au niveau haut "1" qu'à un instant noté t2 situé bien après l'instant t0, le retard de t2 par rapport à t0 étant noté δt.

De plus, à l'instant t0, une impulsion est appliquée à l'entrée RESET du microprocesseur.

Suite à cette mise sous tension, le microprocesseur, à un instant t1 qui est choisi lors de la conception du programme de manière à être situé avant t2, lit la donnée présente sur I/O₃ et constate qu'il s'agit d'un "0" logique.

C'est cette lecture d'un "O" qui permet au microprocesseur de constater que l'impulsion de réinitialisation est une impulsion de réinitialisation à la mise sous tension. Il peut donc effectuer un branchement vers un sous-programme d'initialisation des paramètres, mise à zéro des mémoires, etc..., effectué conventionnellement par le micro-processeur à la mise sous tension.

Plus tard, lorsque le microprocesseur reçoit une autre impulsion de réinitialisation sur son entrée RESET (instant t3), de la même manière que précédemment, il va lire à l'instant t4 l'information logique présente sur l'entrée I/O₃. Et étant donné que durant cette période, aucun changement n'est venu affecter la tension V_{DD}, cette information est et reste au niveau logique "1" lors de l'opération de lecture à l'instant t4.

C'est cette lecture d'un "1" logique qui dans ce cas permet au microprocesseur d'identifier la réinitialisation comme provenant non pas d'une mise sous tension, mais d'une autre origine (en l'occurence une tentative de verrouillage ou déverrouillage des accès du véhicule à l'aide de la clé).

Ainsi, par des moyens aussi simples qu'économiques, le microprocesseur est capable d'établir une distinction tout à fait fiable (et simple à mettre en oeuvre sur le plan du logiciel: lecture d'un port et branchement conditionnel) entre une réinitialisation associée à une mise sous tension du système et une réinitialisation associée à toute autre opération qu'un élément du système demande au microprocesseur d'effectuer.

On notera ici, comme indiqué plus haut, que les positions de la résistance et du condensateur telles que représentées sur la figure 1 peuvent être permutées. Dans ce cas, lors de la mise sous tension, la tension appliquée à l'entrée I/O₃ passe lentement de +5 v à 0 v, tandis qu'en régime permanent, elle reste constamment à O v. Et c'est le retard affecté au passage du niveau haut au niveau bas lors de la mise sous tension qui permet de distinguer une réinitialisation à la mise sous tension d'un autre type de réinitialisation.

On a représenté sur la figure 3 un autre mode de réalisation de l'invention.

Dans ce second mode, la réception d'une impulsion de réinitialisation sur l'entrée RESET du microprocesseur (étape 10) déclenche le branchement sur un sous-programme donné selon lequel:
on teste le contenu d'un emplacement déterminé M de la mémoire vive RAM du microprocesseur (étape 20);
dans le cas où ce contenu est différent d'une valeur logique K, on se branche sur un sous-programme (appelé ici INIT1) qui correspond aux opérations devant être effectuées par le microprocesseur à la suite d'une mise sous tension du système (paramétrages, mise à zéro de la mémoire et des registres,...); et à la fin de l'exécution du sous-programme INIT1 (étape 30), on charge l'emplacement déterminé M avec la valeur logique K (étape 35);

Dans le cas où le contenu de M est égal à K, alors on se branche sur un autre sous-programme appelé INIT2, qui correspond à des opérations devant être effectuées lorsque la réinitialisation n'a pas pour origine une mise sous tension du système (étape 40). Il peut s'agir comme dans l'exemple précédent d'un sous-programme de validation et d'exécution d'un ordre de verrouillage/déverrouillage des accès du véhicule.

Le programme décrit ci-dessus se comporte de la façon suivante: lorsque l'impulsion de réinitialisation est associée à une remise sous tension du système, l'emplacement M contient une valeur qui est différente de la valeur K, puisque par construction toute la mémoire s'est vidée lors de l'arrêt précédent du système. L'initialisation par INIT1, correspondant à une mise sous tension, est donc effectuée, puis la valeur K est chargée dans l'emplacement M.

Lorsque, sans mise hors-tension intermédiaire du système, une autre impulsion de réinitialisation est appliquée à l'entrée RESET, alors il est constaté à l'étape 20 que l'emplacement mémoire M contient bien K, et le branchement est donc effectué sur le sous-programme INIT2 chargé de la gestion de ce second type de réinitialisation.

Il faut noter que, pour un fonctionnement correct de ce second mode de réalisation, la valeur K doit être différente de la valeur que contient l'emplacement considéré M de la mémoire suite à la remise sous tension du système. Dans le cas où cette mémoire, par construction, est entièrement remplie de zéros logiques lors d'une mise sous tension, il suffit en pratique de choisir une valeur K différente de zéros, et d'un nombre de bits tout à fait quelconque. Au contraire, si la mémoire ne contient à la remise sous tension que des niveaux logiques "1", il suffit d'utiliser pour la valeur de K un mot contenant au moins un zéro logique, et à la limite un seul bit à zéro.

En revanche, si par construction la mémoire RAM contient lors d'une remise sous tension une répartition aléatoire de "0" et de "1" logiques, alors il faut que K soit sous la forme d'un mot présentant le plus grand nombre possible de bits, afin d'éviter qu'accidentellement le contenu de M à la mise sous tension soit égal à la valeur prédéterminée K.

Bien que l'on ait décrit la présente invention dans une application où l'on cherche à effectuer une distinction entre un réveil du microprocesseur par une mise sous tension, un réveil pour le verrouillage/déverrouillage des accès à distance et un réveil pour le verrouillage/déverrouillage des accès par clé, il est bien entendu que l'invention s'applique à des distinctions de types et de natures tout à fait quelconques; par exemple l'impulsion de réinitialisation ou d'interruption peut être appliquée dans le cadre d'un apprentissage par le microprocesseur d'un nouveau code de commande à distance, ou encore de l'échange de données avec un calculateur d'injection électronique du moteur, auquel peut être relié le micro-processeur.

Plus généralement, bien que l'on ait décrit la présente invention dans le contexte d'un système à microprocesseur pour des fonctions annexes d'un véhicule automobile, il est bien entendu qu'elle peut s'appliquer avantageusement dès qu'un microprocesseur d'un type quelconque doit pouvoir faire la distinction entre une réinitialisation liée à une mise sous tension et une réinitialisation adressée à lui par un autre organe du système et tenant lieu dans la pratique d'interruption prioritaire.

## Revendications

1. Procédé pour associer à la réception par un microprocesseur (MP) d'une impulsion de réinitialisation (RESET), engendrée par un circuit (110), l'accès à un sous-programme particulier (INIT1; INIT2) selon que l'impulsion est associée à une mise sous tension d'un système incorporant ledit microprocesseur, à des fins de réveil, ou qu'elle constitue une requête en provenance d'un autre organe (100) du système, caractérisé en ce qu'il comprend les étapes consistant à:
lors de la mise sous tension (t₀), faire varier d'un premier état présent à la mise sous tension vers un second état représentant la fin de la mise sous tension une information logique (V1, D1, M) accessible par le microprocesseur seulement après un certain intervalle de temps (δt) après ladite mise sous tension,
lors de chaque réception (10) d'une impulsion de réinitialisation (t₀, t₃), effectuer une lecture (t₁, t₄, 20) de ladite information logique (D1, M) avant que ledit intervalle de temps (δt) soit écoulé, et,
si l'information logique (D1, M) est dans son premier état (M≠k), effectuer un branchement (30) vers un sous-programme d'initialisation (INIT1) propre à une mise sous tension, autrement (M=k) effectuer un branchement (40) vers un sous-programme (INIT2) de traitement de ladite requête.

2. Procédé selon la revendication 1, caractérisé en ce que l'étape consistant à faire varier l'information logique est accomplie par un circuit (R, C) connecté à une source de tension d'alimentation (V_{DD}) du microprocesseur et à une borne d'entrée/sortie (I/O₃) dudit microprocesseur et agencé pour appliquer à ladite borne un signal qui passe d'un niveau logique bas à un niveau logique haut seulement lorsque ledit intervalle de temps (δt) s'est écoulé.

3. Procédé selon la revendication 1, caractérisé en ce que l'étape consistant à faire varier l'information logique est accomplie par un circuit (R, C) connecté à une source de tension d'alimentation (V_{DD}) du microprocesseur et à une borne d'entrée/sortie (I/O₃) dudit microprocesseur et agencé pour appliquer à ladite borne un signal qui passe d'un niveau logique haut à un niveau logique bas seulement lorsque ledit intervalle de temps (δt) s'est écoulé.

4. Procédé selon la revendication 1, caractérisé en ce que le premier état de l'information logique est donné par le contenu d'un emplacement (M) d'une mémoire vive associée au microprocesseur immédiatement après la mise sous tension et en ce que l'étape consistant à faire varier l'information logique est accomplie en donnant audit emplacement un contenu (K) différent, et représentant le second état, seulement à la fin du déroulement (35) du sous-programme d'initialisation (INIT1) propre à la mise sous tension.

5. Dispositif pour la mise en oeuvre du procédé selon la revendication 1, caractérisé en ce qu'il comprend un circuit (R, C) connecté à une source de tension d'alimentation (V_{DD}) du microprocesseur et à une borne d'entrée/sortie (I/O₃) dudit microprocesseur et agencé pour appliquer à ladite borne un signal qui passe d'un niveau logique bas à un niveau logique haut, constituant le second état de l'information logique, seulement lorsque ledit intervalle de temps (δt) s'est écoulé, et en ce qu'il comprend un moyen (Fig. 3) pour effectuer, lors de chaque réception (10) d'une impulsion de réinitialisation (t₀, t₃), une lecture (t₁, t₄, 20) de ladite information logique (D1, M) avant que ledit intervalle de temps (δt) soit écoulé, et pour effectuer, si l'information logique (D1, M) est dans son premier état (M≠k), un branchement (30) vers un sous-programme d'initialisation (INIT1) propre à une mise sous tension, autrement (M=k) effectuer un branchement (40) vers un sous-programme (INIT2) de traitement de ladite requête.

6. Dispositif selon la revendication 5, caractérisé en ce que le circuit comprend une résistance (R) montée entre la source de tension d'alimentation (V_{DD}) du microprocesseur et la borne d'entrée/sortie (I/O₃) dudit microprocesseur et un condensateur (C) monté entre ladite borne d'entrée/sortie et la masse.

7. Dispositif pour la mise en oeuvre du procédé selon la revendication 1, caractérisé en ce qu'il comprend un circuit connecté à une source de tension d'alimentation (V_{DD}) du microprocesseur et à une borne d'entrée/sortie (I/O₃) dudit microprocesseur et agencé pour appliquer à ladite borne un signal qui passe d'un niveau logique haut à un niveau logique bas, constituant le second état de l'information logique, seulement lorsque ledit intervalle de temps s'est écoulé, et en ce qu'il comprend un moyen (Fig. 3) pour effectuer, lors de chaque réception (10) d'une impulsion de réinitialisation (t₀, t₃), une lecture (t₁, t₄, 20) de ladite information logique (D1, M) avant que ledit intervalle de temps (δt) soit écoulé, et pour effectuer, si l'information logique (D1, M) est dans son premier état (M≠k), un branchement (30) vers un sous-programme d'initialisation (INIT1) propre à une mise sous tension, autrement (M=k) effectuer un branchement (40) vers un sous-programme (INIT2) de traitement de ladite requête.

8. Dispositif selon la revendication 7, caractérisé en ce que le circuit comprend un condensateur monté entre la source de tension d'alimentation (V_{DD}) du microprocesseur et la borne d'entrée/sortie (I/O₃) dudit microprocesseur et une résistance montée entre ladite borne d'entrée/sortie et la masse.

## Patentansprüche

1. Verfahren zum Verknüpfen eines durch einen Schaltkreis erzeugten Reinitalisierungsimpulses (RESET) für einen Mikroprozessor (MP) mit dem Zugriff zu einem besonderen Unterprogramm (INIT1; INIT2), je nachdem, ob der Impuls mit einer Einschaltung eines Systems, zu dem der Mikroprozessor gehört, zu Aktivierungszwecken verbunden ist, oder ob er eine Aufforderung bildet, die von einem anderen Organ (100) des Systems stammt, **dadurch gekennzeichnet,** daß es die folgenden Phasen umfaßt:
bei der Einschaltung (t₀) wird eine logische Information (V1, D1, M), die für den Mikroprozessor erst nach einem bestimmten Zeitintervall (δt) nach der Einschaltung zugänglich ist, von einem ersten Status, der beim Einschalten vorliegt, zu einem zweiten Status geändert, der das Ende des Einschaltvorgangs repräsentiert;
bei jedem Empfang (10) eines Reinitialisierungsimpulses (t₀, t₃) erfolgt ein Lesen (t₁, t₄, 20) dieser logischen Information (D1, M), bevor das besagte Zeitintervall (δt) abgelaufen ist;
und wenn sich die logische Information (D1, M) in ihrem ersten Status (M≠k) befindet, erfolgt eine Verzweigung (30) zu einem Initialisierungsunterprogramm (INIT1) für eine Einschaltung, andernfalls (M=k) erfolgt eine Verzweigung (40) zu einem Unterprogramm (INIT2) für die Abarbeitung der betreffenden Aufforderung.

2. Verfahren nach Anspruch 1, **dadurch gekennzeichnet,** daß die Phase, die in der Änderung der logischen Information besteht, durch einen Schaltkreis (R, C) ausgeführt wird, der mit einer Speisespannungsquelle (V_{DD}) des Mikroprozessors sowie mit einen Ein-/Ausgangsanschluß (I/O₃) dieses Mikroprozessors verbunden und so gestaltet ist, daß an den besagten Anschluß ein Signal angelegt wird, das erst dann von einem niedrigen Logikpegel zu einem hohen Logikpegel übergeht, wenn das besagte Zeitintervall (δt) abgelaufen ist.

3. Verfahren nach Anspruch 1, **dadurch gekennzeichnet,** daß die Phase, die in der Änderung der logischen Information besteht, durch einen Schaltkreis (R, C) ausgeführt wird, der mit einer Speisespannungsquelle (V_{DD}) des Mikroprozessors sowie mit einen Ein-/Ausgangsanschluß (I/O₃) dieses Mikroprozessors verbunden und so gestaltet ist, daß an den besagten Anschluß ein Signal angelegt wird, das erst dann von einem hohen Logikpegel zu einem niedrigen Logikpegel übergeht, wenn das besagte Zeitintervall (δt) abgelaufen ist.

4. Verfahren nach Anspruch 1, **dadurch gekennzeichnet,** daß sich der erste Status der logischen Information aus dem Inhalt eines Speicherplatzes (M) eines mit dem Mikroprozessor verknüpften Direktzugriffsspeichers unmittelbar nach der Einschaltung ergibt und daß die Phase, die in der Änderung der logischen Information besteht, dadurch erfolgt, daß diesem Speicherplatz erst am Ende des Ablaufs (35) des Initialisierungsunterprogramms (INIT1) für die Einschaltung ein anderer Inhalt (K) zugeordnet wird, der den zweiten Status repräsentiert.

5. Einrichtung für die Anwendung des Verfahrens nach Anspruch 1 , **dadurch gekennzeichnet,** daß sie einen Schaltkreis (R, C) umfaßt, der mit einer Speisespannungsquelle (V_{DD}) des Mikroprozessors sowie mit einen Ein-/Ausgangsanschluß (I/O₃) dieses Mikroprozessors verbunden und so gestaltet ist, daß an den besagten Anschluß ein Signal angelegt wird, das erst dann von einem niedrigen Logikpegel zu einem hohen Logikpegel, der den zweiten Status der logischen Information bildet, übergeht, wenn das besagte Zeitintervall (δt) abgelaufen ist, und daß sie ein Mittel (Fig. 3) umfaßt, um bei jedem Empfang (10) eines Reinitialisierungsimpulses (t₀, t₃) ein Lesen (t₁, t₄, 20) der logischen Information (D1, M) auszuführen, bevor das Zeitintervall (δt) abgelaufen ist, und, wenn sich die logische Information (D1, M) in ihrem ersten Status (M≠k) befindet, eine Verzweigung (30) zu einem Initialisierungsunterprogramm (INIT1) für eine Einschaltung auszuführen, während andernfalls (M=k) eine Verzweigung (40) zu einem Unterprogramm (INIT2) für die Abarbeitung der Aufforderung erfolgt.

6. Einrichtung nach Anspruch 5 , **dadurch gekennzeichnet,** daß der Schaltkreis einen Widerstand (R) umfaßt, der zwischen der Speisespannungsquelle (V_{DD}) des Mikroprozessors und dem Ein-/ Ausgangsanschluß (I/O₃) dieses Mikroprozessors angeordnet ist, sowie einen Kondensator (C), der sich zwischen diesem Ein-/Ausgangsanschluß und der Masse befindet.

7. Einrichtung für die Anwendung des Verfahrens nach Anspruch 1 , **dadurch gekennzeichnet,** daß sie einen Schaltkreis umfaßt, der mit einer Speisespannungsquelle (V_{DD}) des Mikroprozessors sowie mit einen Ein-/Ausgangsanschluß (I/O₃) dieses Mikroprozessors verbunden und so gestaltet ist, daß an den besagten Anschluß ein Signal angelegt wird, das erst dann von einem hohen Logikpegel zu einem niedrigen Logikpegel, der den zweiten Status der logischen Information bildet, übergeht, wenn das besagte Zeitintervall (δt) abgelaufen ist, und daß sie ein Mittel (Fig. 3) umfaßt, um bei jedem Empfang (10) eines Reinitialisierungsimpulses (t₀, t₃) ein Lesen (t₁, t₄, 20) der logischen Information (D1, M) auszuführen, bevor das Zeitintervall (δt) abgelaufen ist, und, wenn sich die logische Information (D1, M) in ihrem ersten Status (M≠k) befindet, eine Verzweigung (30) zu einem Initialisierungsunterprogramm (INIT1) für eine Einschaltung auszuführen, während andernfalls (M=k) eine Verzweigung (40) zu einem Unterprogramm (INIT2) für die Abarbeitung der Aufforderung erfolgt.

8. Einrichtung nach Anspruch 7 , **dadurch gekennzeichnet,** daß der Schaltkreis einen Kondensator umfaßt, der zwischen der Speisespannungsquelle (V_{DD}) des Mikroprozessors und dem Ein-/ Ausgangsanschluß (I/O₃) dieses Mikroprozessors angeordnet ist, sowie einen Widerstand, der sich zwischen diesem Ein-/Ausgangsanschluß und der Masse befindet.

## Claims

1. A method of associating the reception by a microprocessor (MP) of a reset pulse (RESET), generated by a circuit (110), with access to a specific subprogram (INIT1; INIT2) depending on whether the reset pulse is associated with a system incorporating said microprocessor being switched on for the purposes of "waking up" the microprocessor, or whether it constitutes a request coming from some other unit (100) in the system, the method being characterized in that it comprises the following steps:
on switch-on (t₀), causing a logical data item (V1, D1, M) accessible by the microprocessor to change from a first state present at switch-on to a second state representing the end of switch-on only after a certain time interval (δt) has elapsed since said switch-on;
reading (t₁, t₄, 20) said logical data item (D1, M) before said time interval (δt) has elapsed on each occasion (10) that a reset pulse (t₀, t₃) is received; and,
if the logical data item (D1, M) is in its first state (M ≠ k), branching (30) to an initialization subprogram (INIT1) appropriate to switch-on, otherwise (M=k) branching to a subprogram (INIT2) appropriate to processing said request.

2. A method according to claim 1, characterized in that the step of causing the logical data item to change is performed by a circuit (R, C) connected to a power supply voltage source (V_{DD}) for the microprocessor and to an input/output terminal (I/O₃) of said microprocessor and disposed to apply to said terminal a signal which passes from a low logic level to a high logic level only after said time interval (δt) has elapsed.

3. A method according to claim 1, characterized in that the step of causing the logical data item to change is performed by a circuit (R, C) connected to a power supply voltage source (V_{DD}) for the microprocessor and to an input/output terminal (I/O₃) of said microprocessor and disposed to apply to said terminal a signal which passes from a high logic level to a low logic level only after said time interval (δt) has elapsed.

4. A method according to claim 1, characterized in that the first state of the logic data item is given by the contents immediately after switch-on of a location (M) in the read/write memory associated with the microprocessor, and in that the step consisting in causing said logical data item to change is accomplished by giving said location different contents (K), and representing the second state, only after the initialization subprogram (INIT1) associated with switch-on has finished running (35).

5. Apparatus for implementing the method of claim 1, characterized in that it comprises a circuit (R, C) connected to a power supply voltage source (V_{DD}) of the microprocessor and to an input/output terminal (I/O₃) of said microprocessor and disposed to apply to said terminal a signal which passes from a low logic level to a high logic level constituting the second state of the logic data item, only after said time interval (δt) has elapsed and in that it comprises means (Figure 3) for reading (t1, t4, 20) said logical data item (D1, M) before said time interval (δt) has elapsed on each occasion (10) that a reset pulse (t₀, t₃) is received, and if the logical data item (D1, M) is in its first state (M≠k), for branching (30) to an initialization subprogram (INIT1) appropriate to switch-on, or otherwise (M=k) for branching (40) to a subprogram (INIT2) appropriate to processing said request.

6. Apparatus according to claim 5, characterized in that the circuit comprises a resistor (R) connected between the microprocessor power supply voltage source (V_{DD}) and the input/output terminal (I/O₃) of said microprocessor, and a capacitor (C) connected between said input/output terminal and ground.

7. Apparatus for implementing the method of claim 1, characterized in that it comprises a circuit connected to a power supply voltage source (VDD) of the microprocessor and to an input/output terminal (I/O₃) of said microprocessor and disposed to apply to said terminal a signal which passes from a high logic level to a low logic level constituting the second state of the logic data item, only after said time interval has elapsed and in that it comprises means (Figure 3) for reading (t1, t4, 20) said logical data item (D1, M) before said time interval (δt) has elapsed on each occasion (10) that a reset pulse (t₀, t₃) is received, and if the logical data item (D1, M) is in its first state (M≠k), for branching (30) to an initialization subprogram (INIT1) appropriate to switch-on, or otherwise (M=k) for branching (40) to a subprogram (INIT2) appropriate to processing said request.

8. Apparatus according to claim 7, characterized in that the circuit comprises a capacitor connected between the microprocessor power supply voltage source (V_{DD}) and the input/output terminal (I/O₃) of said microprocessor, and a resistor connected between said input/output terminal and ground.
